# EUROPÄISCHE PATENTANMELDUNG

(11) **EP 2 650 788 A1**
(43) Veröffentlichungstag der Anmeldung: **16.10.2013**
(21) Anmeldenummer: 12163691.4
(22) Anmeldetag: 11.04.2012
(51) Int. Cl.: G06F 11/22

(54) **Netzwerkbasierter Chipkartentest**

(71) Anmelder: achelos GmbH, 33100 Paderborn (DE)
(72) Erfinder: Volke, Holger, 33100 Paderborn (DE); Dietsch, Christian, 33100 Paderborn (DE)
(74) Vertreter: Reimann, Silke

(57) **Zusammenfassung**

Die Erfindung beschreibt eine Testanordnung und ein Verfahren zum Test von Chipkarten (5) an einem Client (3) in einem Netzwerk (2), wobei der Client (3) mit einem Server (1) in dem Netzwerk (2) verbunden ist; auf dem eine Testsuite (9) für Chipkarten (5) mit einer Vielzahl von Testfällen vorgehalten ist, an dem Client (3) ein oder mehrere Chipkartenterminals (4) angeschlossen sind, auf dem Client (3) ein Applet (6) zum Betreiben der Chipkartenterminals (4) und zum Anstoßen ein oder mehrere Testfälle ausgeführt wird.

## Beschreibung

Die Erfindung betrifft eine Testanordnung zum Test von Chipkarten mit einem Server, der mit einer Vielzahl von Clients über ein Netzwerk verbindbar ist und ein Verfahren zum Test der Chipkarten an den Clients.

Chipkarten, insbesondere Smartcards, werden in verschiedensten Anwendungen genutzt. Dazu werden Daten auf der Chipkarte in einer Datenstruktur hinterlegt. Die Daten in der Datenstruktur müssen auf ihre Richtigkeit überprüft werden, bevor sie an Anwender ausgeliefert werden. Bei ausgelieferten Karten ist deren Überprüfung bei einem Auftreten von Fehlern erst recht erforderlich.

Üblicherweise ist es erforderlich, dass die Chipkarte zur Überprüfung an eine zentrale Stelle eingesendet werden muss, dort überprüft wird und das Ergebnis der Überprüfung dann zusammen mit dem Zurücksenden der Chipkarte mitgeteilt wird.

So ist in der Patentschrift US 7,127,649 B2 ein Smartcard-Testsystem beschrieben, dass lokal betrieben wird und bei dem über USB-Schnittstellen die Chipkartenterminals oder andere programmierbare Datenträger an ein Computersystem, auf dem Testfälle ablaufen können, angeschlossen sind.

In der Offenlegungsschrift DE 10 2004 052 197 A1 ist ein Verfahren zum Testen einer Daten verarbeitenden Schaltung beschrieben, in dem die Baumstrukturen einer Chipkarte mit einem Testsystem getestet werden. Dabei ist die Chipkarte lokal an das Testsystem angeschlossen. Das Testsystem kann um ein integriertes Entwurfssystem erweitert sein, das mit dem Testsystem zusammen auf einem Rechner installiert ist oder ggf. auch über ein Datennetz mit dem Testsystem verbunden sein kann.

Es ist Aufgabe der Erfindung eine Testanordnung und ein Verfahren zum Testen von Chipkarten zu offenbaren, die lokal an einen Client in einem Netzwerk angeschlossen sind, wobei Testfälle zentral aus dem Netzwerk abgerufen werden können und keine Testvorrichtungen an dem lokalen Rechner notwendig sind.

Diese Aufgabe wird durch eine Vorrichtung mit den Merkmalen des Anspruchs 1 sowie ein Verfahren gemäß Anspruch 5 gelöst.

Ausführungsformen der Erfindung sind in den abhängigen Ansprüchen beschrieben.

Die Testanordnung für Chipkarten basiert auf einem Server in einem Netzwerk, der mit Clients verbunden ist, an denen eine oder mehrere Chipkarten angeschlossen sind. Auf dem Server wird eine Testsuite für Chipkarten mit einer Vielzahl von Testfällen vorgehalten. Auf jedem Client wird ein Applet zum Betreiben der Chipkartenterminals, zum Anstoßen eines oder mehrerer Testfälle und zur Kontrolle der Ergebnisse gestartet.

Durch eine solche Testanordnung ist es möglich, dass Chipkarten, ohne dass sie eine lokale Umgebung verlassen müssen, geprüft werden können. So kann z.B. ein Produzent von Chipkarten seine hergestellten Chipkarten ohne die Herausgabe aus seiner sicheren Umgebung selbst prüfen und optional korrigieren.

Das Netzwerk ist vorzugsweise im Internet realisiert. Damit stehen die dort üblichen Verbindungsmechanismen zur Verfügung. Insbesondere wird die Verbindung zwischen dem Server und den Clients verschlüsselt und ist damit sicher.

Über das Applet sind alle Möglichkeiten vorhanden, um Testfälle zu starten und Ergebnisse anzuzeigen.

Das Verfahren zum Testen einer Chipkarte in einer Testanordnung wie oben beschrieben nutzt folgende Schritte:
- Ein Nutzer führt eine zu testende Chipkarte in das Chipkartenterminal ein;
- Eine Verbindung des Clients mit dem Server wird herstellt.;
- Das Applet wird vom Server auf den Client übertragen und dort ausgeführt;
- Die Testsuite im Server wird aufgerufen;
- Mögliche Testfälle werden im Applet dargestellt;
- Der Nutzer sucht Testfälle aus und startet diese;
- Kommandos aus den Testfällen werden vom Server an die Chipkarte übertragen;
- Antworten der Chipkarte auf die Kommandos werden zur Testsuite auf dem Server übertragen;
- in der Testsuite auf dem Server werden die Antworten ausgewertet und in einem Report zusammengefasst.

Auf dem Server ist ein Webserver installiert, der die Verbindungen zu dem Client hält. und das Applet auf den Client überträgt.

Das Applet wird in dem Client für die angeschlossenen Chipkartenterminals und die zu testenden Chipkarten konfiguriert. Dazu wird auch das Protokoll für die Kommunikation mit den Chipkarten festgelegt.

In einer besonderen Ausführungsform ist das Applet auch in der Lage, eine Funktionsprüfung der angeschlossenen Chipkartenterminals vorzunehmen.

Diese Funktionsprüfung wird über ein Menü im Applet gestartet und das Ergebnis der Funktionsprüfung wird dort auch dargestellt.

Als Teil der Funktionsprüfung ist auch vorgesehen, ein Answer to Reset (ATR) von gesteckten Chipkarten auszulesen und auszuwerten.

In dem Applet wird ein Menü angeboten, über das einzelne Testfälle oder Gruppen von Testfällen gestartet werden können. Die Testfälle laufen dann, von der Testsuite im Server gesteuert, so ab, dass Kommandos von den Testfällen an die Chipkarte übertragen werden. Die Chipkarte antwortet, indem sie die Kommandos entsprechend der internen Logik abarbeitet und Statusmeldungen sowie optionale Daten zurückliefert. Die Antworten auf die Kommandos werden in der Testsuite ausgewertet und diese Auswertungen werden gespeichert.

Die Auswertungen können einem Nutzer zugänglich gemacht werden, indem sie über das Netzwerk gesendet werden. Dies kann als Email geschehen. Im Applet werden die Zustände der Testfälle visualisiert. Optional kann serverseitig das Protokollieren der Kommandos erlaubt werden.

Wenn an dem Server ebenfalls eine Chipkarte angeschlossen ist, kann diese für weitere Funktionen der Testsuite genutzt werden. So ist es möglich, zwischen einer Chipkarte am Server und einer Chipkarte am Client eine Card-to-Card-Authentisierung durchzuführen.

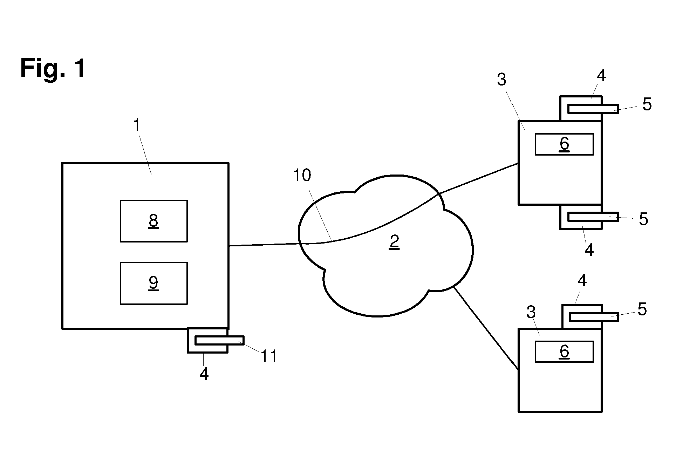

Die Testanordnung wird anhand der Figur 1 näher erläutert.

In Fig.1 ist der Server 1 dargestellt, der über das Netzwerk 2 über eine Datenverbindung 10 mit einem oder mehreren Clients 3 verbunden ist. An den Clients 3 sind ein oder mehrere Chipkartenterminals 4 angeschlossen, die jeweils eine Chipkarte 5 enthalten können. Auch an dem Server 1 können Chipkarten 11 über Chipkartenterminals 4 angeschlossen sein.

In dem Server 1 arbeiten der Webserver 8, der die Datenverbindungen 10 hält, und die Testsuite 9, die eine Vielzahl von Testfällen enthält sowie eine Auswertung der Antworten von den Chipkarten 5 vornimmt.

In jedem Client 3 ist das Applet 6 gestartet, das mit der Testsuite 9 und den angeschlossenen Chipkartenterminals 4 kommuniziert und die Testdurchführung anstößt. Die Anzeige des Ergebnisses der Auswertung ist über das Applet 6 möglich.

### Bezugszeichen:

- 1: Server
- 2: Netzwerk
- 3: Client
- 4: Chipkartenterminal
- 5: Chipkarte
- 6: Applet
- 8: Webserver
- 9: Testsuite
- 10: Verbindung
- 11: Chipkarte am Server

## Patentansprüche

1. Testanordnung zum Test von Chipkarten (5) an einem Client (3) in einem Netzwerk (2), **dadurch gekennzeichnet, dass**
der Client (3) mit einem Server (1) in dem Netzwerk (2) verbunden ist;
auf dem eine Testsuite (9) für Chipkarten (5) mit einer Vielzahl von Testfällen vorgehalten wird,
an dem Client (3) ein oder mehrere Chipkartenterminals (4) angeschlossen sind,
auf dem Client (3) ein Applet (6) zum Betreiben der Chipkartenterminals (4) ausgeführt wird
und über das ein oder mehrere Testfälle angestoßen werden.

2. Testanordnung nach Anspruch 1, **dadurch gekennzeichnet, dass** das Netzwerk (2) das Internet ist.

3. Testanordnung nach Anspruch 2, **dadurch gekennzeichnet, dass** die Verbindung (10) zwischen Server und Client verschlüsselt ist.

4. Testanordnung nach Anspruch 1, **dadurch gekennzeichnet, dass** am Server Chipkartenterminals (4) mit Chipkarte (11) angeschlossen ist.

5. Verfahren zum Testen einer Chipkarte (5) in einer Testanordnung nach einem der vorstehenden Ansprüche, **dadurch gekennzeichnet, dass**
- ein Nutzer eine zu testende Chipkarte (5) in ein Chipkartenterminal (4) einführt und eine Verbindung (10) des Clients (3) mit dem Server (1) herstellt
- die Testsuite (9) im Server (1) aufruft,
- das Applet (6) vom Webserver (8) auf den Client (3) übertragen und dort gestartet wird,
- mögliche Testfälle im Applet (6) dargestellt werden,
- der Nutzer Testfälle aussucht und startet,
- Kommandos aus den Testfällen vom Server (3) an die Chipkarte (5) übertragen werden,
- Antworten der Chipkarte (5) auf die Kommandos zur Testsuite (9) übertragen werden und
- in der Testsuite die Antworten ausgewertet und in einem Report zusammengefasst werden.

6. Verfahren nach Anspruch 5, **dadurch gekennzeichnet, dass** auf dem Server (1) ein Webserver (8) installiert ist, der die Verbindungen (10) zu dem Client (3) hält und das Applet (6) auf den Client überträgt.

7. Verfahren nach Anspruch 6, **dadurch gekennzeichnet, dass** das Applet (6) im Client für die angeschlossenen Chipkartenterminals (4) konfiguriert wird.

8. Verfahren nach Anspruch 7, **dadurch gekennzeichnet, dass** bei der Konfiguration das Protokoll für den Betrieb des jeweiligen Chipkartenterminals (4) festgelegt wird.

9. Verfahren nach Anspruch 7, **dadurch gekennzeichnet, dass** über das Applet (6) eine Funktionsprüfung der angeschlossenen Chipkartenterminals(4) vorgenommen wird.

10. Verfahren nach Anspruch 9, **dadurch gekennzeichnet, dass** bei der Funktionsprüfung der Answer to Reset (ATR) von gesteckten Chipkarten (5) ausgelesen und in dem Applet (6) dargestellt werden.

11. Verfahren nach Anspruch 5, **dadurch gekennzeichnet, dass** einzelne Testfälle oder Gruppen von Testfällen aufgerufen werden.

12. Verfahren nach Anspruch 5, **dadurch gekennzeichnet, dass** die Antworten auf die Kommandos der Testfälle nur auf dem Server (1) ausgewertet und gespeichert werden.

13. Verfahren nach Anspruch 12, **dadurch gekennzeichnet, dass** die Zustände der Testfälle in dem Applet (6) visualisiert werden.

14. Verfahren nach Anspruch 12, **dadurch gekennzeichnet, dass** Ergebnisse der Tests dem Nutzer per Email zugestellt werden.

15. Verfahren nach Anspruch 6, **dadurch gekennzeichnet, dass** eine Chipkarte (5) am Client (3) parallel mit einer Chipkarte (11) am Server (1) genutzt wird, um eine Card-to-Card-Authentisierung durchzuführen.
